# EUROPEAN PATENT APPLICATION

(11) **EP 4 603 339 A1**
(43) Date of publication of application: **20.08.2025**
(21) Application number: 24158113.1
(22) Date of filing: 16.02.2024
(51) Int. Cl.: B60R 21/02

(54) **KNEE PROTECTION ARRANGEMENT**

(71) Applicant: Volvo Car Corporation, 405 31 Göteborg (SE)
(72) Inventor: NAZARI, Amir, 40531 Göteborg (SE); BESKOW, David, 40531 Göteborg (SE)
(74) Representative: Maiwald GmbH

(57) **Abstract**

The disclosure relates to a knee protection arrangement (10) for a vehicle (100), and for protecting the knees of an occupant (1) of the vehicle (100) during a crash event, the knee protection arrangement (10) comprising two support elements (12) configured to attach the knee protection arrangement (10) to a front panel (30) of the vehicle (100), and an elastic membrane (11) being attached to the two support elements (12) and arranged in between the two support elements (12).

## Description

### TECHNICAL FIELD

The present disclosure relates to a knee protection arrangement for a vehicle, a knee protection system for a vehicle, and a vehicle.

### BACKGROUND ART

In order to restrain the knees and legs in frontal vehicle crashes, it is known to use knee air bags. However, knee airbags require inflators and a specific cushion shape and folding. The process of designing the air bag concept, ensuring integrity of the air bag, and capturing spreads in the manufacturing of the air bag is a tedious and often difficult task. This results in the complicated and expensive knee airbags being used today.

### SUMMARY

The problem is at least partially solved or alleviated by the subject matter of the independent claims of the present disclosure, wherein further examples are incorporated in the dependent claims.

According to a first aspect, there is provided a knee protection arrangement for a vehicle, and for an occupant, particularly the knees of the occupant, of the vehicle during a crash event, or with other words, in the event of collision, and the knee protection arrangement comprising two support elements configured to attach the knee protection arrangement to a front panel, in particular instrument panel, of the vehicle, and an elastic membrane being attached to the two support elements and arranged in between the two support elements. In particular, the elastic membrane may be attached to the front panel by means of the two support elements or, in other words, the two support elements may be configured to attach the elastic membrane via the support elements to the front panel.

Compared to a conventional knee airbag, the proposed knee protection arrangement removes the need for the complexity of controlling a three-dimensional cushion filled with hot gas. Instead, a lightweight elastic membrane may be used, which does not require any volume to be filled. The membrane may be elastically deformed, in particular tensioned or stretched in between the two support elements, when the knees of the occupant impact it during the crash event, thereby giving way to the knees, while still ensuring that the knees cannot move beyond a certain point or resistance of the membrane, thereby protecting the knees of the occupant from an impact with other vehicle structures or an external structure intruding into the vehicle during the crash event. Otherwise, if the knees of the occupant where not withheld from moving to the front, impacting any other vehicle structure than the elastic membrane may lead to an injury of the knees, feet, legs and/or spine of the occupant.

The omission of any cushion to be filled with gas ensures that the knee protection arrangement can be deployed later in a crash event as it does not impact the legs like a deploying knee airbag might. One more benefit of the proposed knee protection arrangement is the small packaging volume compared to the bulky modules of knee airbags that require packaging space inside the instrument panel. In particular, as instrument panels tend to get slimmer, fitting conventional airbags inside becomes more and more of a challenge, while the knee protection arrangement of the disclosure may easily be fitted even in very slim instrument panels. It may simply be tucked under the front panel, in particular instrument panel. Hence, the knee protection arrangement of this disclosure is cheaper, less complicated and lighter than conventional knee airbags, while keeping the same functionality of protecting the knees of occupants during crash events.

According to an example, the elastic membrane may be pretensioned, in particular elastically pretensioned, between the two support elements and/or the elastic membrane may be configured to be tensioned, in particular elastically tensioned, when contacting the knees of the occupant during the crash event. By pretensioning or, in other words, prestretching the elastic membrane between the two support elements, the knee protection arrangement may relatively early in the crash event prevent the knees of the occupant of moving forward by, in particularly increasingly, limiting the movement of the knees towards the front of the vehicle. With the configuration for tensioning of the elastic membrane when contacting the knees, there may be a pretensioning of the membrane or there may be no pretensioning of the membrane. Instead, the membrane may be loose, for example, its width between the support elements may be larger than a distance between the two support elements. This gives more way for the knees to move during the crash event. Also, it has the advantage that the elastic membrane will not degrade, for example, loose its elasticity, over time. The stretching or tensioning of the membrane may be passively provided by the knee protection arrangement. This means that the knee protection arrangement does not actively stretch or tension the membrane but instead, it is only by contacting the knees and receiving a corresponding force from the knees by the elastic membrane, that the membrane is stretched or tensioned. An active operation of the knee protection arrangement however may be seen in the deployment of the elastic membrane in the crash event.

According to an example, the knee protection arrangement may be configured to absorb at least a portion of the kinetic energy received by the elastic membrane when contacting the knees of the occupant during the crash event by tensioning, or further tensioning if the elastic membrane is pretensioned, the elastic membrane during the crash event. The elastic membrane may be configured such that the tensioning becomes less with increasing force. In other words, the further the knees push or press into the elastic membrane and thereby tension it, the more force may be required to further tension or stretch the membrane. Thereby, the elastic membrane may be effectively limiting the total movement of the knees towards the front of the movement in the crash event.

According to an example, the two support elements may be extending in length along opposite sides of the elastic membrane. The opposite sides of the elastic membrane may be short or long sides of the elastic membrane, for example. The elastic membrane may have a generally rectangular extension and/or surface. The support elements may limit the elastic membrane towards its sides. In particular, the elastic membrane may be fixed in between and/or by the support elements.

According to an example, at least one of the two support elements may be configured as part of a hinge configured to rotatably connect the knee protection arrangement, in particular the elastic membrane via the two support elements, to the front panel. Accordingly, also both support elements may be configured as parts of one hinge or separate hinges. In particular, at least one of the two support elements or both may be provided with a hinge, enabling the support element(s) to be arranged to the front panel and/or enabling the support element(s) to pivot in relation to the front panel. For example, the at least one of the two support elements may comprise at least part of the hinge or the entire hinge, for example, attached thereto or integrated therewith. Alternatively, or additionally, one of the two support elements or both may be configured to rotatably arrange the knee protection arrangement to the front panel by means of a one or more hinges, for example, one hinge for each support element or one hinge for both support elements. Having one support element or support elements as part of the hinge allows for a compact design in view of the support elements supporting the elastic membrane and serving for rotatable and thereby deployable connection to the front panel. In the example of having one single hinge, such hinge may be arranged at or comprised by any of the two support elements or, alternatively, at another element arranged at or connected to the support elements. For example, this other element may be arranged between the support elements or connected to both, in particular at the ends of the support elements, and the hinge may be provided on this other element, specifically in a middle section thereof located between the support elements.

Generally, the elastic membrane may be any thin and elastic structure of sufficient strength to dampen movements of the knees of an occupant without breaking. The elastic membrane may be defined as having a width and length which is much greater than its thickness, for example, with a factor of width and/or length to thickness of at least 10, at least 20, at least 50, at least 100. Hence, the elastic membrane may be described as a substantially two-dimensional or planar structure, which may have only little thickness compared to its width and thickness. The elastic membrane may consist of one or more layers of material. The material, or materials if comprising more than one layer, of the elastic membrane may for example be a fabric, any suitable plastic material or a suitable combination thereof. Further, the elastic membrane may have holes, recesses or similar. According to examples, the elastic membrane may be in form of a net.

According to an example, the elastic membrane may comprise a fabric material. In particular, the elastic membrane may be made from a fabric material.

According to an example, the elastic membrane may comprise a single layer of material. By having the membrane made from a single layer of material, it may be designed particularly slim and cost-effective yet sufficiently strong to protect the knees of the occupant. For example, the single layer of material may be a fabric material.

According to an example, the elastic membrane, in particular the single layer of material, may have a thickness of less than 20 mm, in particular of less than 10 mm, further in particular of less than 7 mm, moreover in particular of less than 5 mm and further in particular of about 3 mm. This allows for a very slim and light design of the elastic membrane while still being sufficiently protective.

According to a second aspect, there is provided a knee protection system for a vehicle, the knee protection system comprising a knee protection arrangement, and an actuator system attachable, meaning being configured to be attached, to a front panel of the vehicle, the actuator system being configured to move the knee protection arrangement from a first position for storing the knee protection arrangement underneath the front panel into a second position for protecting the knees of the occupant during the crash event. According to examples, the bottom section of the front panel may be provided with recesses configured to store the protection arrangement such that the bottom surface of the front panel becomes essentially flat.

According to an example, the knee protection system may comprise at least one hinge for rotatably connecting at least one of the support elements of the knee protection arrangement to the front panel. According to an example, the two support elements are provided with one hinge each, respective hinge rotatably connecting respective support element to the front panel. Accordingly, the knee protection arrangement may be deployed by rotating at least one of the support elements, in particular both support elements, about or relative to the front panel. In other words, the hinge(s) of the knee protection system may be configured to attach at least one of the two support elements of the knee protection arrangement to the front panel, and when being deployed or, in other words, activated, the knee protection arrangement can thereby pivot in relation to the front panel by means of the hinge(s), causing the elastic membrane of the knee protection arrangement to engage with and suppress the movement of the knees of an occupant.

According to an example, the actuator system may comprise at least one extendible element for moving the knee protection arrangement from the first position into the second position by pushing the knee protection arrangement away from the front panel. For example, the at least one extendible element may be configured to contact the knee protection arrangement at at least one of the two support elements and/or at the elastic membrane, thereby pushing the knee protection arrangement from the first position into the second position.

According to an example, the at least one extendible element may be a telescopic element. Accordingly, the at least one extendible element may be telescopically extending in length. Compared to a moving piston or similar, the knee protection system may thereby be kept very compact in line with the overall compact design thereof.

According to an example, the actuator system may comprise a pyrotechnic element for actuating the actuator system. While other actuation elements are possible, the pyrotechnic element ensures a very fast extension of the at least one extendible element and therefore a quick deployment of the knee protection arrangement or in a crash event.

According to yet an example, the actuator system may be configured to stop moving the knee protection arrangement from the first position towards the second position when the knee protection arrangement is exposed to a predefined resistive force when or by engaging with the knees of the occupant. According to an example, the actuator system may comprise, or be connected to, a sensor configured for sensing the resistive force experienced by the knee protection arrangement. When experiencing, or when such resistive force is sensed by a sensor, the actuator system may be configured to stop moving. Thereby, it may be prevented that the knees of the occupant are exposed to a potentially damaging force by the knee protection arrangement in the event of a crash or collision.

Additionally, according to examples, the at least one extendible element and/or the at least one hinge may be configured to be locked in place when reaching the second position, or when the movement of the knee protection arrangement is stopped due to the knee protection arrangement experiencing the resistive force. According to an example, the knee protection system may comprise a control system, the control system being configured to receive a first signal indicative of a crash of the vehicle, to receive a second signal indicative of the occupant not using a seat belt of the vehicle, and to control the actuator system to move the knee protection arrangement into the second position based on the first signal and the second signal, that is, based on that the first signal indicates a crash and the second signal indicates that that the occupant is not using a seat belt. For clarification, the occupant for which the second signal indicates usage or not usage of a seat belt is the occupant of the seat provided with the knee protection arrangement or the knee protection system. Accordingly, the knee protection arrangement may be deployed only when there is a crash of the vehicle, in particular a frontal crash of the vehicle, and the occupant for which the knee protection arrangement is deployed is not using a seat belt. Hence, it is ensured that the occupant requires the knee protection arrangement because without the seat belt restraining their movement, his or her knees may otherwise impact or collide with the structures in the vehicle cabin and/or an intruding exterior structure. When the second signal is not received or when the second signal is indicative of the seat belt being used, it may be provided that the actuator may not be controlled to move the knee protection arrangement into the second position and thus remain in the first position. The first signal may be received from one or more crash sensor(s), one or more other sensor(s) and/or any system(s) in some way capable of detecting or indicating an imminent or occurring collision. Crash sensor is here to be interpreted broadly, and can be any sensor capable of gathering data, or performing measurements, that may be signaled to a CPU, or similar, of the vehicle, whereby the CPU, or similar, may use such data to detect or predict an imminent of occurring collision. Such crash sensor(s) may for example be arranged around the vehicle, particularly in the front of the vehicle, and be capable of visually detecting an imminent crash and/or sense chock pulses, whereby activation of the knee protection system me be triggered. The second signal may be received from a seat belt module observing whether an occupant uses a seat belt or not, for example, whether the seat belt is buckled into its corresponding receptacle or not, for example. Additionally, or alternatively, the control system may be configured to receive a third signal indicative of the occupant occupying or, in other words, sitting in the seat. This is generally referred to as occupant sensing or occupancy sensing, and may for example me realized by using a seat occupancy sensor. The seat occupancy sensor may be a magnetically operated push button sensor allowing the control system to determine the presence of an object or person in a seat. The control system may be configured to control the actuator system to move the knee protection arrangement into the second position based on the first signal, the second signal and the third signal, that is, based on that the first signal indicates a crash, that the second signal indicates that that the occupant is not using a seat belt and the third signal indicates that the seat is occupied. For example, in case the third signal is missing or, in other words, not received by the control system, the knee protection arrangement may not be deployed. In particular, it may be provided that the control system needs to receive all three signals as mentioned herein to deploy the knee protection arrangement. For clarification, the occupant for which the second signal indicates usage or not usage of a seat belt is the occupant of the seat provided with the knee protection arrangement or the knee protection system, which also is the same occupant for which the third signal indicates presence or no presence.

According to a third aspect, there is provided a vehicle comprising the knee protection arrangement of the first aspect of this disclosure or the knee protection system of the second aspect of this disclosure.

The vehicle may be an automotive vehicle. For example, the vehicle may be a passenger car.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a side view of a portion inside of a vehicle comprising a knee protection arrangement according to the disclosure shortly before a crash event;
- Figure 2: shows a perspective view of the portion inside of the vehicle of Fig. 1 during the crash event;
- Figure 3: shows a perspective view of the portion inside of the vehicle of Fig. 1 during the crash event having a different knee protection arrangement than in Fig. 2;
- Figure 4: shows a schematic illustration of a knee protection system according to the disclosure before a crash event; and
- Figure 5: shows a schematic illustration of a knee protection system according to the disclosure during a crash event.

### DETAILED DESCRIPTION

The Figures are merely schematic representations and serve only to illustrate examples of the disclosure. Identical or equivalent elements are in principle provided with the same reference signs.

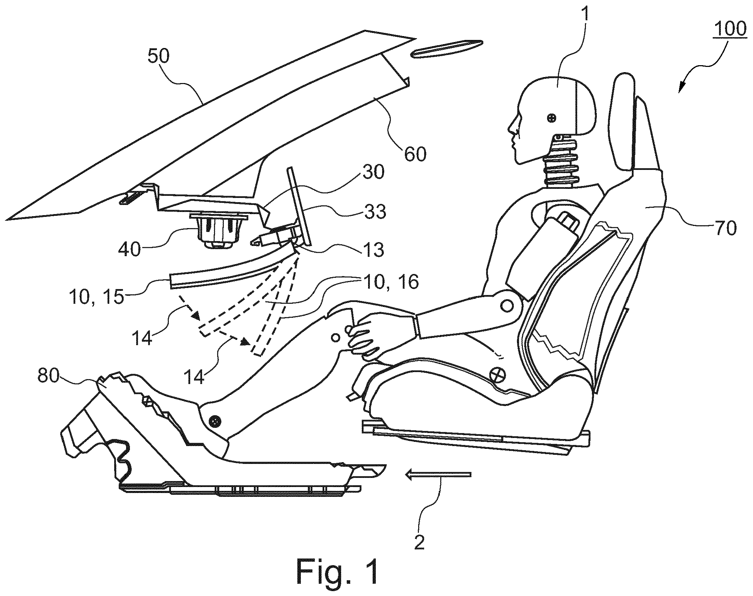

Figure 1 shows a vehicle 100 comprising a front panel 30, a front air bag system 40, a windscreen 50, an A-pillar 60, a vehicle seat 70, and a footrest 80. An occupant 1 is shown to be seated in the vehicle seat 70 and to be resting his feet on the footrest 80. Accordingly, the shown occupant 1 may be a co-pilot in the vehicle 100. Alternatively, the occupant 1 may be the driver of the vehicle 100 and the footrest 80 or another front structure may be provided with one or more pedals for controlling the vehicle 100, for example, gas and/or brake pedals.

The front panel 30 may be an instrument panel, for example, comprising one or more instruments for providing the driver with information for driving the vehicle 100, for example, travel speed information, and/or an infotainment system 33 or generally any display. Further, or alternatively, the instrument panel may have other elements (not shown) attached thereto, such as a steering wheel, climate control system, air ducts, and similar.

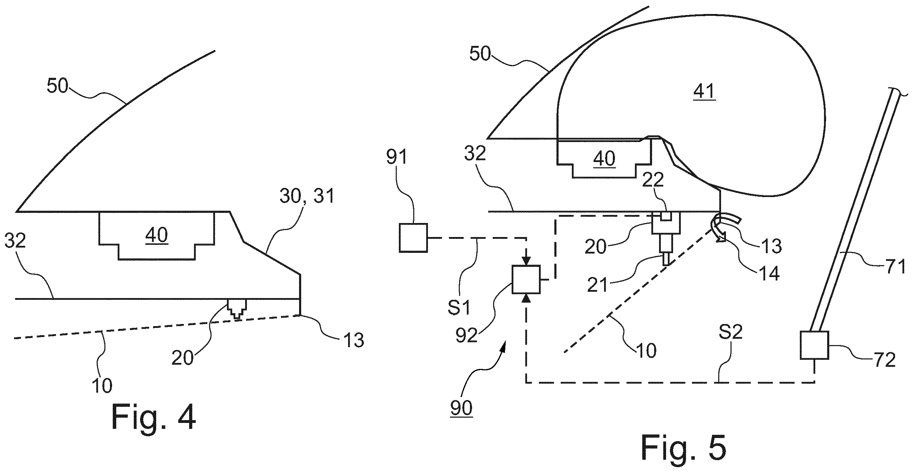

In this example, the front panel 30 has an optional front air bag system 40 attached thereto. The front air bag system 40 may be deployed for protecting the occupant 1 during a crash event. A front air bag 41 or cushion of the front air bag system 40 may be deployed between the front panel 30 and the windscreen 50 by means of inflation as shown in Fig. 4, for example. In case the occupant 1 is the driver, the front air bag system 40 may be alternatively or additionally provided at a steering wheel (not shown) of the vehicle 100, for example.

While the front air bag system 40 protects an upper body section of the occupant 1 during a crash event, for example, including the head of the occupant 1, the lower body section, specifically the legs and knees, of the occupant 1 may be unprotected and harmed during the crash event, if no protective measure is provided in this part of the vehicle 100. To protect specifically the knees of the occupant 1 during the crash event, in particular a frontal crash event of the vehicle 100, the vehicle 100 is provided with at least one knee protection system 90 (see Fig. 4) comprising at least one knee protection arrangement 10. For example, each one of the vehicle leg rooms for the driver and co-pilot may be provided with one knee protection arrangement 10 and/or knee protection system 90.

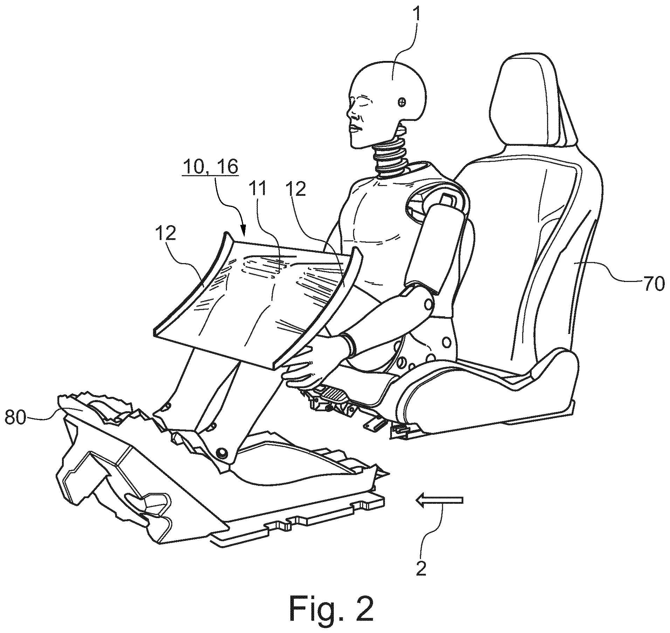

As shown in Fig. 1 before the crash event and in Fig. 2 during the crash event, the knee protection arrangement 10 may comprise an elastic membrane 11 configured for protecting the knees of the occupant 1 or occupants 1 seated in the front vehicle seats 70 of the vehicle 100 during the crash event, in particular frontal crash event. The knee protection arrangement 10 may comprise two support elements 12, which may be rotatably connected via one or more hinges 13 to the front panel 30. For example, both support elements 12 may be connected via separate hinges 13 or the same hinge 13. The elastic membrane 11 may be attached to both support elements 12 and arranged in between the two support elements 12. In particular, the two support elements 12 may be located opposite of one another and/or extend in length in parallel with one another. The elastic membrane 11 may be pretensioned and/or at least configured to be tensioned or stretched upon contacting the knees of the occupant 1 during the crash event as shown in Fig. 2.

Normally, in a first position 15, the knee protection arrangement 10 is stored or located underneath the front panel 30. In particular, the knee protection arrangement 10 may be stored or located at or underneath a bottom section 32 of the front panel 30. Thereby, the knee protection arrangement 10 may be hidden from the occupant 1 or occupants 1 when they are seated in their vehicle seats 70. Specifically, the occupant 1 or occupants 1 may only see a top section 31 of the front panel 30 located opposite of the bottom section 32.

Further, the knee protection arrangement 10 may be configured to be inactive or, in other words, not capable of contacting the knees of the occupant 1 when the occupant 1 moves into the movement direction 2 indicated by an arrow during the crash event. However, the knee protection arrangement 10 may be activated in a crash event. For this purpose, the knee protection arrangement 10 may be configured to be moved by an actuator system 20 of the knee protection system 90 into a second position 16, in which the movement of the knees into the movement direction 2 may be restricted, in particular stopped, by means of the elastic membrane 11 of the knee protection arrangement 10. Thereby, the knee protection arrangement 10 may be activated. When activated, the elastic membrane 11 may absorb at least some of the kinetic energy from the movement of the occupant 1 during the crash event by tensioning or, in other words, stretching the elastic membrane 11 in the movement direction 2. In the first position 15 or generally, the elastic membrane 11 may be substantially planar. In the second position 16 or when the knees are contacting the elastic membrane 11, however, the elastic membrane 11 may be deformed as exemplary shown in Fig. 2. The knee protection arrangement 10 may substantially extend in width and length as wide as, or slightly less than, the extension in width and length of the vehicle leg room underneath the front panel 30 inside the vehicle 100. Hence, the knee protection arrangement 10 may be used independent of the size of the occupant 1, which does not need to be considered for deploying the knee protection arrangement 10.

The second position 16 and an intermediate position between both positions 15, 16 are indicated in Fig. 1 by a dashed illustration of the knee protection arrangement 10 and arrows indicating a movement direction 14 of the knee protection arrangement 10 from the first position 15 into the second position 16 (see also Fig. 4). The rotational movement direction 14 of the knee protection arrangement 10 is configured to be substantially opposite to the movement direction 2 of the occupant 1 during the crash event. In other words, the knee protection arrangement 10 is moved towards the knees during the crash event, while the knees of the occupant 1 will typically move towards the knee protection arrangement 10 or front of the vehicle 100. The second position 16 may be predetermined. However, the actuator system 20 may be configured to stop moving the knee protection arrangement 10 from the first position 15 into the second position 16 upon the elastic membrane 11 contacting the knees of the occupant 1 during the crash event. In this case, the second position 16 may be determined by the time and/or location when the knees of the occupant 1 impact the elastic membrane 11 during the crash event.

As shown in Figs. 4 and 5, the actuator system 20 may comprise at least one extendible element 21, for example, in the form of a telescopic element, which may be configured to move the knee protection arrangement 10 from the first position 15 into the second position 16 by pushing the knee protection arrangement 10 away from the front panel 30, in particular the bottom section 32 thereof, thereby rotating the knee protection arrangement 10 about the hinge or hinges 13. In other words, the actuator system 20 may be configured to be attached, meaning being connectable or arrangeable, to the bottom section 32 of the front panel 10 and in contact with at least one of the two support elements 12 of the knee protection arrangement 10. Thereby, when the extendible element 21 of the of the actuator system 20 extends, the knee protection arrangement 10 is pushed away from the front panel 10, meaning from the bottom section 32 of the front panel 30. Since, when the knee protection arrangement 90 is deployed, the knee protection system 10 is arranged to the front panel 30 by a hinge 13, or by hinges 13, the knee protection arrangement 10 will pivot, or rotate about the hinge 13 or hinges 13, when being pushed away from the front panel 30. For actuating the actuator system 20 by extending the extendible element 21, the actuator system 20 may further comprise a pyrotechnic element 22. The actuator system 20, in particular the pyrotechnic element 22, may be configured to bring the knee protection arrangement 10 into the second position 16 in less than 50 ms, in particular less than 30 ms, and further in particular in less than 20 ms, for example, in about 15 ms.

The extendible element 21 may be configured to push on any part of the knee protection arrangement 10 to deploy it, for example, any one or both of the support elements 12. Further, it may be possible to provide more than one extendible element 21 for pushing on different parts of the knee protection arrangement 10 to deploy it, for example, two extendible elements 21, each one configured to push one of the two support elements 12. The two extendible elements 21 may be of the same actuator system 20 or different actuator systems 20. In any case, for example, when different actuator systems 20 with extendible elements 21 are being used, the actuator systems 20 may be synchronized with one another so as to move both support elements 21 in a synchronized manner. When both, the driver and the co-pilot side in the vehicle 100 are equipped with a knee protection system 90 or knee protection apparatus 10, the actuator systems 20 or extendible elements 21 of each one of the driver and co-pilot side in the vehicle 100 may be synchronized for synchronized movement of both knee protection apparatuses 10 in the crash event.

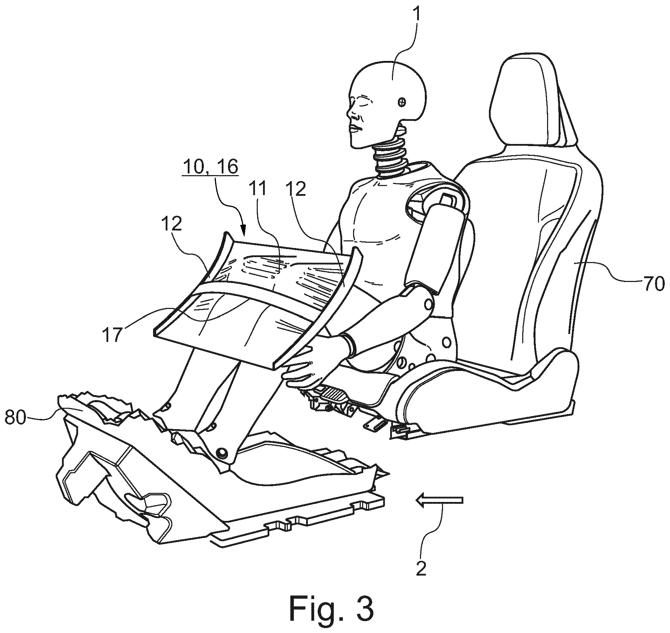

Figure 3 shows an alternative protection arrangement 10 compared to Fig. 2, where the knee protection arrangement 10 additionally has a connecting element 17, which connects both support elements 12 with one another. This connecting element 17 may be positioned at a section between the hinge 13 or hinges 13, attaching respective support element 12 to the front panel 30, and opposite end thereof, for example, approximately in the middle thereof or, in other words, approximately in the middle of the longitudinal extension of the support elements 12. This connecting element 17 may alternatively or additionally be used by the actuator system 20 or extendible element 21 for deploying the knee protection arrangement 10 in a crash event, for example, by pushing onto the connecting element 17 or, in other words, pushing the connecting element 17 away from the front panel 30. The connecting element 17 may be arc-shaped. Specifically, the connecting element 17 may substantially extend in an arc shape between the support elements 12. Thereby, it may be prevented that the connecting element 17 comes into contact with the lower legs or knees of the occupant 1 during the crash event. With the connecting element 17, it is possible to bring the knee protection arrangement 10 into the second position 16 by a pushing movement centered relative to the knee protection arrangement 10, for example, by pushing approximately onto a middle section of the connecting element 17, without having to provide two extendible elements 21 or two actuator systems 20, as discussed above.

Further, the knee protection system 90 may comprise a control system 92 for controlling the actuation of the actuator system 20, in particular of the pyrotechnic element 22. The control system 92 may be configured to receive a first signal S1 indicative of a crash, in particular frontal crash, of the vehicle 100. Such first signal S 1 is exemplary shown herein to be received from a crash sensor 91, in particular a frontal crash sensor. Further, the control system 92 may be configured to receive a second signal S2 indicative of the occupant 1 not using a seat belt 71 of the vehicle 100. Such second signal S2 is exemplary shown herein to be received from a seat belt module 72. When the control system 92 receives both, the first signal S 1 and the second signal S2, the control system 92 may control the actuator system 20 to move the knee protection arrangement 10 into the second position 16, thereby quickly providing for protection of the knees of the occupant 1 when the occupant 1 is not using a seat belt 71 during the crash event. Similarly, to when the occupant 1 would use the seat belt 71 during the crash event, the forward movement of the occupant 1 is being restricted by the knee protection arrangement 10, preventing or at least reducing injury of a lower body section of the occupant 1.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 1: occupant
- 2: movement direction of the occupant during crash event
- 10: knee protection arrangement
- 11: elastic membrane
- 12: support element
- 13: hinge
- 14: movement direction of the knee protection arrangement during crash event
- 15: first position
- 16: second position
- 20: actuator system
- 21: extendible element
- 22: pyrotechnic element
- 30: front panel
- 31: top section
- 32: bottom section
- 33: infotainment system
- 40: front air bag system
- 41: front air bag
- 50: windscreen
- 60: A-pillar
- 70: vehicle seat
- 71: seat belt
- 72: seat belt module
- 80: footrest
- 90: knee protection system
- 91: crash sensor
- 92: control system
- 100: vehicle

## Claims

1. A knee protection arrangement (10) for a vehicle (100), and for protecting an occupant (1) of the vehicle (100) during a crash event, the knee protection arrangement (10) comprising:
- two support elements (12) configured to attach the knee protection arrangement (10) to a front panel (30) of the vehicle (100), and
- an elastic membrane (11) being attached to the two support elements (12) and being arranged in between the two support elements (12).

2. The knee protection arrangement (10) of claim 1, the elastic membrane (11) being pretensioned between the two support elements (12) and/or the elastic membrane (11) being configured to be tensioned when contacting the knees of the occupant (1) during the crash event.

3. The knee protection arrangement (10) of claim 1 or 2, the knee protection arrangement (10) being configured to absorb at least a portion of the kinetic energy received by the elastic membrane (11) when contacting the knees of the occupant (1) during the crash event by tensioning the elastic membrane (11) during the crash event.

4. The knee protection arrangement (10) of any one of the previous claims, the two support elements (12) extending in length along opposite sides of the elastic membrane (11).

5. The knee protection arrangement (10) of any one of the previous claims, the elastic membrane (11) comprising a single layer of material.

6. The knee protection arrangement (10) of any one of the previous claims, the elastic membrane (11) having a thickness of less than 20 mm.

7. A knee protection system (90) for a vehicle (100), the knee protection system (90) comprising a knee protection arrangement (10) according to any one of the previous claims, and an actuator system (20), the actuator system (20) being attachable to the front panel (30) of the vehicle (100), and being configured to move the knee protection arrangement (10) from a first position (15) for storing the knee protection arrangement (10) underneath the front panel (30) into a second position (16) for protecting the knees of the occupant (1) during the crash event.

8. The knee protection system (90) of claim 7, the knee protection system (90) comprising a hinge (13) for rotatably connecting at least one of the support elements (12) of the knee protection arrangement (10) to the front panel (30).

9. The knee protection system (90) of claim 7 or 8, the actuator system (20) comprising at least one extendible element (21) for moving the knee protection arrangement (10) from the first position (15) into the second position (16) by pushing the knee protection arrangement (10) away from the front panel (30).

10. The knee protection system (90) of claim 9, the at least one extendible element (21) being a telescopic element.

11. The knee protection system (90) of any one of claims 7 to 10, the actuator system (20) comprising a pyrotechnic element (22) for actuating the actuator system (20).

12. The knee protection system (90) of any one of claims 7 to 11, the actuator system (20) being configured to stop moving the knee protection arrangement (10) from the first position (15) into the second position (16) upon contacting the knees of the occupant (1) during the crash event.

13. The knee protection system (90) of any one of claims 7 to 12, the knee protection system (90) comprising a control system (92), the control system (92) being configured to receive a first signal indicative of a crash of the vehicle (100), to receive a second signal indicative of the occupant (1) not using a seat belt (71) of the vehicle (100), and to control the actuator system (20) to move the knee protection arrangement (10) into the second position (16) based on the first signal and the second signal.

14. The knee protection system (90) of claims 13, the control system (92) further being configured to receive a third signal indicative of an occupant sitting in the seat provided with the knee protection system (90), and to control the actuator system (20) to move the knee protection arrangement (10) into the second position (16) based on the first signal, the second signal and the third signal.

15. A vehicle (100) comprising the knee protection arrangement (10) of any one of claims 1 to 6 or the knee protection system (90) of any one of claims 7 to 14.
